# EUROPÄISCHE PATENTANMELDUNG

(11) **EP 0 955 486 A1**
(43) Veröffentlichungstag der Anmeldung: **10.11.1999**
(21) Anmeldenummer: 98107096.4
(22) Anmeldetag: 18.04.1998
(51) Int. Cl.: F16H 3/22, F16H 3/40, F16H 55/08

(54) **Umkehr-Schieberad-Anordnung fuer ein Wechselgetriebe**

(71) Anmelder: Ford Global Technologies, Inc., A subsidiary of Ford Motor Company, Dearborn, Michigan 48126 (US)
(72) Erfinder: Mohr, Christian, 54290 Trier (DE)
(74) Vertreter: Drömer, Hans-Carsten, Dipl.-Ing.

(57) **Zusammenfassung**

Bei einer Umkehr-Schieberad-Anordnung für ein Wechselgetriebe, bei dem das geradverzahnte oder schrägverzahnte Umkehr-Schieberad (2) auf einer Schieberadachse (B) axial verschiebbar angeordnet ist und zum Bewirken einer Drehrichtungsumkehr zwischen einer Eingangswelle auf der Achse (A) und einer Ausgangswelle auf der Achse (C) in Eingriff mit einem Zahnrad (1) auf der Eingangswelle (A) und einem Zahnrad (3) auf der Ausgangswelle (C) bringbar ist und wobei die in Einschieberichtung (S) liegenden Stirnkanten der Zähne der beteiligten Zahnräder (1, 2 und 3) mit sogenannten Anspitzungen oder Abdachungen (4, 5 und 6 sowie 7) zum Erleichtern des Einspurens versehen sind, sind am Umkehr-Schieberad (2) zwei unterschiedliche Gruppen von Anspitzungen (5 und 6) angeordnet, von denen die Anspitzung an jedem zweiten Zahn um einen bestimmten Betrag (x) zurückgenommen ist.

## Beschreibung

Die Erfindung bezieht sich auf eine Umkehr-Schieberad-Anordnung für ein Wechselgetriebe, bei dem das zumeist geradverzahnte Umkehr-Schieberad auf einer Schieberadachse axial verschiebbar angeordnet ist und zum Bewirken einer Drehrichtungsumkehr zwischen einer Eingangs- und Ausgangswelle in Eingriff mit einem Zahnrad auf der Eingangswelle und mit einem Zahnrad auf der Ausgangswelle bringbar ist und wobei die in Einschieberichtung liegenden Stirnkanten der beteiligten Zahnräder mit sogenannten Anspitzungen oder Abdachungen zum Erleichtern des Einspurens versehen sind.

Aus der DE 11 28 757 C1 ist eine Umkehr-Schieberad-Anordnung für ein Wechselgetriebe, der im Oberbegriff des Patentanspruches 1 erläuterten Art bekannt.

Bereits vor mehr als 35 Jahren war es den Fachleuten auf diesem Gebiet bekannt, daß bei solchen Umkehr-Schieberad-Anordnungen während des Einschiebens Blockierprobleme auftraten, und dies trotz der vorgesehenen Anspitzungen oder Abdachungen und dementsprechend wurde versucht, mit zusätzlichen Vorrichtungen wie federnde Radscheiben und dergleichen dafür zu sorgen, daß ein Gleichlauf zwischen den miteinander zusammenwirkenden Zahnrädern hergestellt werden konnte.

Diese bekannten Vorrichtungen stellen allesamt einen erheblichen Herstellungs- und Montageaufwand dar, den man immer wieder zur Vermeidung von Kosten in Wegfall brachte.

Insbesondere bei Rückwärtsgang-Schieberad-Anordnungen für Wechselgetriebe in Kraftfahrzeuge wurden zur Lösung des auch hier besonders störend auftretenden Blockierproblems eine ungeheure Vielzahl von sogenannten Rückwärtsgang-Bremseinrichtungen entwickelt, die das Einschieben ohne Probleme sicherstellen sollten. Das Augenmerk richtet sich dabei im wesentlichen auf den Verschleiß der Anspitzung, der durch das Bremsen vermieden werden sollte. Eine unbeschädigte Anspitzung weist in der Regel eine geringere Blockerrate auf. Das Blockieren selbst konnte dadurch jedoch nicht verhindert werden.

Die Einführung von Rückwärtsgangsystemen mit Bremseinrichtung als Ersatz für vollsynchronisierte Systeme ist bisher an dem Phänomen des Blockierens gescheitert. Erst mit Systemen, die nahezu frei von Blockern sind, macht ein solcher Ersatz, der im Vergleich zum vollsynchronisierten Rückwärtsgang keinen Funktionsverlust darstellt, Sinn. Die Kosteneinsparung ist erheblich.

Auch Systeme ohne Bremseinrichtung profitieren wegen der vielfach verbesserten Funktion und geringerem Verschleiß an der Anspitzung von der Erfindung.

Auch solche Bremsvorrichtungen erforderten einen zusätzlichen Herstellungs- und Montageaufwand und wurden daher bei Fahrzeugmodellen, bei denen die Kostenkalkulation äußerst scharf zu führen war, nicht eingesetzt.

Bei den in Kraftfahrzeugen angewendeten Rückwärtsgang-Schieberad-Anordnungen kommt es durch das bekannte Blockierproblem immer wieder zu Beschädigungen der Zahnräder, da durch die am Handschalthebel aufgebrachte Schaltkraft infolge der internen Hebelübersetzung des Schaltgestänges so erhebliche Kräfte auf die Stirnkanten der beteiligten Zahnräder einwirken, daß diese bleibend beschädigt werden.

Die Aufgabe der Erfindung ist es, eine Umkehr-Schieberad-Anordnung für ein Wechselgetriebe, der im Oberbegriff des Patentanspruches 1 erläuterten Art derart zu verbessern, daß ohne nennenswerte Erhöhung der Herstellungskosten eine Verringerung des Blockierproblems beim Einschieben der miteinander zusammenwirkenden Zahnräder auf nahe Null erreicht werden kann

Gemäß der Erfindung wird diese Aufgabe schon weitestgehend dadurch gelöst, daß die im Kennzeichenteil des Patentanspruches 1 aufgezeigten Merkmale angewendet werden.

Durch die Anwendung der in den Patentansprüchen 2 und 3 noch weiterhin aufgezeigten zusätzlichen Merkmale wird auch bei schwierigen Umkehr-Schieberad-Anordnungen eine Reduzierung des Blockierproblems auf nahezu Null erreicht.

Die Erfindung wird anhand eines in den beiliegenden Zeichnungen gezeigten Ausführungsbeispieles näher erläutert. Es zeigt:
- Fig. 1: eine schematische Darstellung einer Umkehr-Schieberad-Anordnung für ein Wechselgetriebe;
- Fig. 2: eine schematische Getriebeaufrollung der miteinander zusammenwirkenden Zahnräder, wobei das Zahnrad auf der Eingangswelle und das Zahnrad auf der Ausgangswelle nur zur Hälfte dargestellt sind;
- Fig. 3: eine Ansicht des Zahnrades auf der Eingangswelle mit der entsprechenden Anspitzung;
- Fig. 4: eine Ansicht des Schieberades mit seinen beiden unterschiedlichen Anspitzungen und
- Fig. 5: eine Ansicht des Zahnrades auf der Ausgangswelle mit seiner Anspitzung.

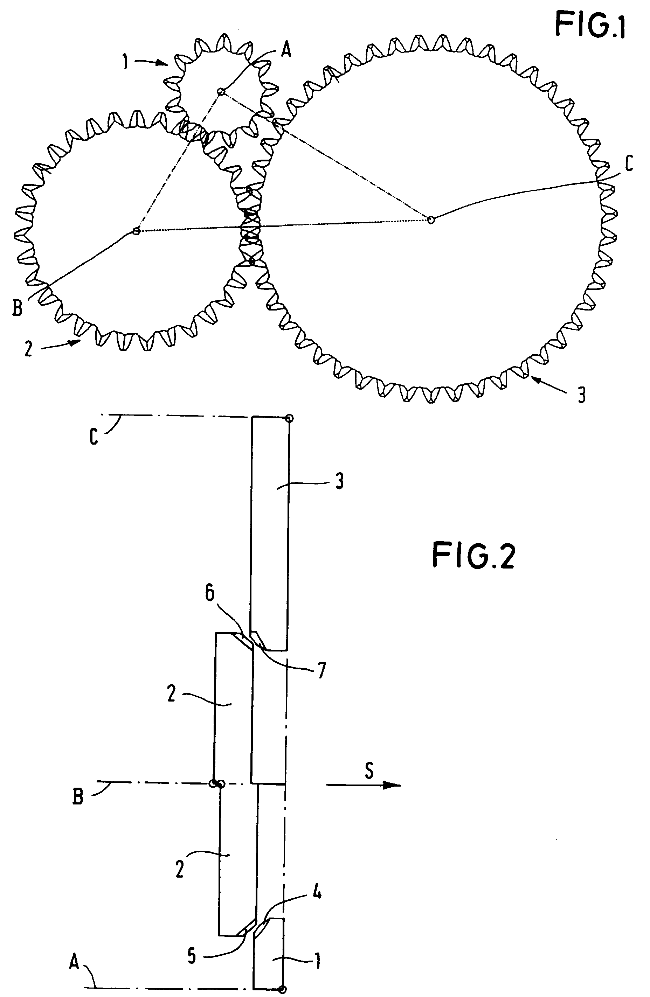

In Fig. 1 sind die entsprechenden Achsen der Eingangswelle, der Schieberadachse und der Ausgangswelle mit A, B und C bezeichnet.

Ein Zahnrad 1 ist hierbei auf einer Eingangswelle (nicht gezeigt) mit der Achse A angeordnet. Ein Schieberad 2 ist auf einer Schieberadachse (nicht gezeigt) auf der Achse B angeordnet und ein Zahnrad 3 ist auf einer Ausgangswelle (nicht gezeigt) auf der Achse C angeordnet.

Die Einschieberichtung des Umkehr-Schieberades 2 ist in Fig. 2 mit einem Pfeil S angegeben.

Die Stirnkanten der Verzahnungen der miteinander zusammenwirkenden Zahnräder 1, 2 und 3 weisen an sich bekannte Anspitzungen oder Abdachungen 4, 5 und 6 und 7 auf.

Ein wesentliches Merkmal der vorliegenden Erfindung besteht darin, daß das Umkehr-Schieberad 2 zwei unterschiedliche Anspitzungen 5 und 6 aufweist, die sich dadurch unterscheiden, daß die eine Anspitzung auf jedem zweiten Zahnrad um einen bestimmten Betrag zurückgenommen ist.

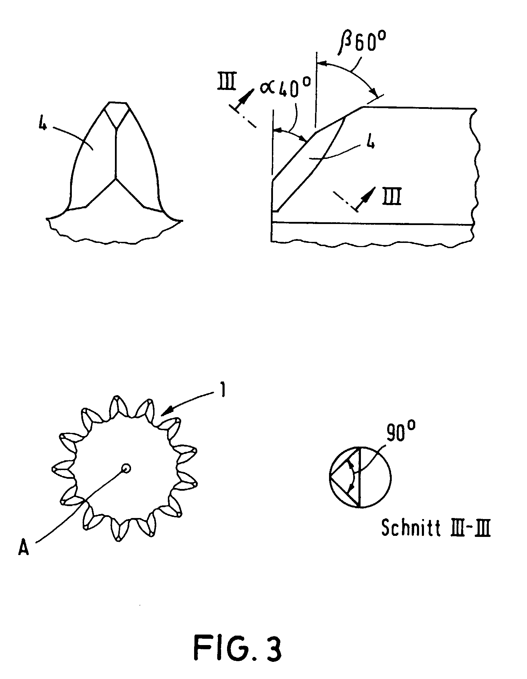

In den Figuren 3 bis 5 werden die besonderen Anspitzungen am Zahnrad 1 auf der Eingangswelle, auf dem Umkehr-Schieberad 2 auf der Schieberadachse und auf dem Zahnrad 3 auf der Ausgangswelle im Detail erläutert.

Die in Zusammenhang in Fig. 3 gezeigte Anspitzung bzw. Abdachung 4 weist einen Scheitelwinkel von 90°, einen Firstwinkel von 40° und eine zusätzliche Zahnkopffase mit 75° auf.

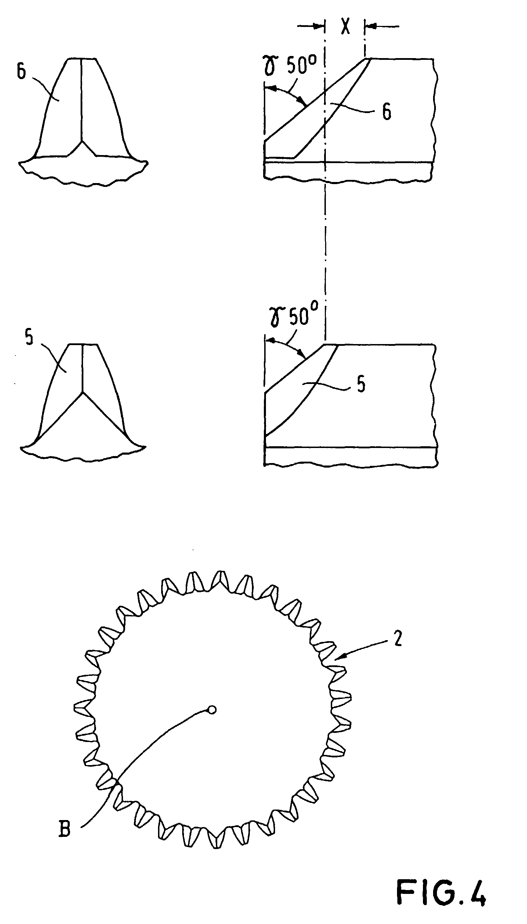

Die im Zusammenhang mit Fig. 4 erläuterte Anspitzung bzw. Abdachung 5 und 6 am Umkehr-Schieberad 2 weist grundsätzlich eine Anspitzung bzw. Abdachung mit gleichem Scheitelwinkel auf, wie das Zahnrad 1, der Firstwinkel ist jedoch auf 50° vergrößert und die Anspitzung ist an jedem zweiten Zahn um das Maß x nach hinten versetzt. Dabei muß die Firstkante des zurückgenommenen Zahnes nicht den gleichen Winkel aufweisen.

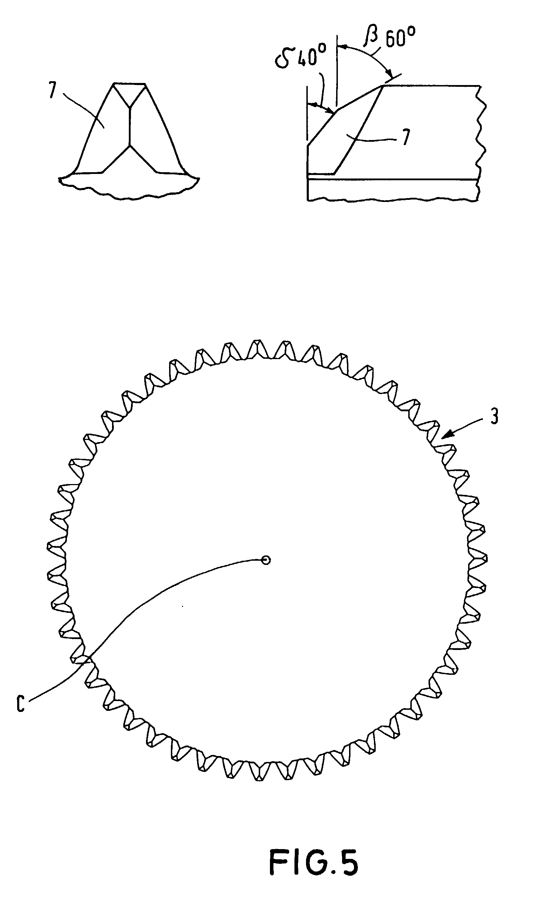

Die in Zusammenhang mit Fig. 5 erläuterte Anspitzung bzw. Abdachung 7 weist wieder den gleichen Scheitelwinkel auf und hat einen Firstwinkel von 40° und eine Zahnkopffase von 75°.

Durch die erfindungsgemäße unterschiedliche Ausbildung der Lage und der Firstwinkel der Anspitzung bzw. Abdachung an den Stirnkanten der Zähne der zusammenwirkenden Zahnräder 1, 2 und 3 wird sichergestellt, daß das normalerweise die Blockierprobleme bewirkende Aufeinandertreffen zweier Firstkanten der Abdachungen, wodurch bei den aufgebrachten hohen Schaltkräften kein Abgleiten sondern ein Blockieren eintrat, bei der erfindungsgemäßen Ausbildung der Anspitzung bzw. Abdachung nicht mehr auftritt.

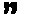 Punktkontakt der Firstkanten mit stumpfen Kontaktwinkel der Abdachungen wird vermieden."

Die in den Zeichnungen angegebenen Winkelmaße sind selbstverständlich nur als Ausführungsbeispiele anzusehen, die im gezeigten Fall der Umkehr-Schieberad-Anordnung mit den hierbei vorgesehenen Zähnezahlen zu einer erwünschten Verminderung der Blockierprobleme nach Null hin geführt hat.

Die Zurücknahme eines jeden zweiten Zahnes kann prinzipiell auch an den Kontaktpartnern des Zwischenrades vorgenommen werden. (Die Anzahl der Zähne am Zwischenrad bzw. der Zähne des Zahnrades mit Zurücknahme sollte gerade sein.)

Die Größe bzw. der Beginn der Phase ergibt sich aus den Kontaktpunkten von 2 plus 2 Firstkanten im Raum beim Zusammentreffen des Zwischenrades und einer seiner Kontaktpartner.

Die Fase kann theoretisch auch an dem Zwischenrad, vorteilhaft für das Blockierverhalten, angebracht werden.

## Patentansprüche

1. Umkehr-Schieberad-Anordnung für ein Wechselgetriebe, bei dem das geradverzahnte oder schrägverzahnte Umkehr-Schieberad (2) auf einer Schieberadachse (B) axial verschiebbar angeordnet ist und zum Bewirken einer Drehrichtungsumkehr zwischen einer Eingangswelle auf einer Achse (A) und einer Ausgangswelle auf einer Achse (C) in Eingriff mit einem Zahnrad (1) auf der Eingangswelle (A) und einem Zahnrad (3) auf der Ausgangswelle (C) bringbar ist und wobei die in Einschieberichtung (S) liegenden Stirnkanten der beteiligten Zahnräder (1, 2 und 3) mit sogenannten Anspitzungen oder Abdachungen (4, 5 und 6, sowie 7) zum Erleichtern des Einspurens versehen sind,
**dadurch gekennzeichnet**, daß
- am Umkehr-Schieberad (2) zwei unterschiedliche Gruppen von Anspitzungen (5 und 6) angeordnet sind, von denen die zweite Gruppe, um einen bestimmten Betrag (x) zurückgenommen ist.

2. Umkehr-Schieberad-Anordnung für ein Wechselgetriebe nach Anspruch 1, **dadurch gekennzeichnet**, daß
- die Anspitzung bzw. Abdachung (5 und 6) an den Stirnkanten der Zähne des Umkehr-Schieberades (2) mit ihrer Firstkante einen Winkel γ zu einer Senkrechten zur Wellenachse einschließt, der größer ist als der entsprechende Winkel α und δ an den beiden anderen zusammenwirkenden Zahnrädern 1 und 3.

3. Umkehr-Schieberad-Anordnung für ein Wechselgetriebe nach den Ansprüchen 1 und 2,
**dadurch gekennzeichnet**, daß
- die Anspitzung bzw. Abdachung (4 bzw. 7) an den Stirnkanten der Zähne der Zahnräder (1 und 3) auf der Eingangswelle bzw. der Ausgangswelle zusätzlich eine Zahnkopfabfasung (3) aufweisen.
